# EUROPEAN PATENT SPECIFICATION

(11) **EP 1 915 242 B1**
(45) Date of publication and mention of the grant of the patent: **12.10.2016**
(21) Application number: 06778490.0
(22) Date of filing: 01.08.2006
(51) Int. Cl.: B27B 13/10, B23D 55/08

(54) **METHODS FOR STRAINING AND STEERING OF A BLADE IN A SAWING DEVICE AND STEERING AND STRAINING DEVICE**
VERFAHREN ZUM SPANNEN UND FÜHREN EINES BLATTS IN EINER SÄGEVORRICHTUNG UND FÜHRUNGS- UND SPANNUNGSVORRICHTUNG
METHODES ET DISPOSITIF POUR FORCER ET DIRIGER UNE LAME DANS UN DISPOSITIF DE SCIAGE

(30) Priority: 01.08.2005 FI 20050790
(43) Date of publication of application: 30.04.2008
(73) Proprietor: Viljanen, Reijo, 73030 Kolsva (SE)
(72) Inventor: Viljanen, Reijo, 73030 Kolsva (SE)
(74) Representative: Salomäki, Juha Kari Ensio
(86) International application number: PCT/FI2006/000268
(87) International publication number: WO 2007/014979

(56) References cited:
- EP-A1- 0 513 437
- WO-A1-00/47378
- WO-A1-00/47378
- AT-B- 287 332
- DE-A1- 19 653 242
- JP-A- H06 278 127
- SE-B- 413 586
- SE-B- 436 849
- SE-B- 436 849
- US-A- 4 085 636
- US-A- 4 085 636
- US-A- 4 662 259
- DATABASE WPI Section PQ, Week 198851 Thomson Scientific, London, GB; Class P63, AN 1988-367653 XP002712816, -& SU 1 404 342 A1 (LVOVSK LESOTEKH INST) 23 June 1988 (1988-06-23)

## Description

The invention relates to a method and a device to strain a sawing device blade made of magnetic material, to a chosen sawing line and to keep it on said line. The sawing device is a circular saw or a band saw. The invention also relates to a method to steer a blade of a sawing device.

Previously known from the published Swedish application SE 436 849 is a system working by means of magnetic forces in order to position the blade to remain on a chosen sawing line. If the blade stays on line no magnetic forces are conducted to he blade. When the blade moves aside from line one tries to return the blade to the line by means of magnetic forces. Stated in the publication is that the same invention can also be applied to a band saw band-knife

Presented in publication WO 00/47378 is the control of a band saw band-knife by means of magnetic forces, when inside the object to be sawn, deviation of blade from the chosen sawing line is observed. The band-knife is, if needed, turned inside the object to be sawn by means of magnetic forces in order return it to the sawing line. WO00/47378 discloses the preambles of method claims 1 and 8 and the preamble of device claim 6.

Above described control and stability arrangements of the blade of magnetic material mainly work only when deviation of blade from the sawing line has been noticed and by means of them one tries to improve the quality of sawing in trying to steer the blade inside the tree to the sawing line. Known in band saws are mechanical drags or rolls, which are close to the object to be dragged and usually at once thereafter in the blade direction These drags and rolls, in present band saws, determine the sawing line. In publication SE 436849 adjusting bits are replaced with magnets which are placed on both sides of the circular saw close to the blade immediately before the tree to be sawn and thereafter. With these ones it is tried to steer the blade to stay on the chosen line, even if the tree to be sawn would, due of its non-uniformity, try to turn the blade. Due to thermal expansion these do not prevent the bending to wave form and wave-like rolling of the blade, since they are on the same diameter line. The wave form only seeks the amplitude point to these points and the blade continues to roll fluttering.

The above invention is focused to replace the mechanical drags or rolls of band saws.

The invention is defined by the features of method claims 1 and 8 and by the features of device claim 6. Preferred embodiments are defined by the features of the dependent claims 2-5, 7 and 9.

The advantage of the invention is that in band saws harmful drags can be replaced with untouchable pulling magnets or pushing magnets, whereby many handicaps caused by the use of drags can be avoided. The drags tear and cause excess friction to band rotation and also generate heat into band. Forces caused by magnets do not wear and tear the band, they keep their position and adjustment of band position, in other words, the distance is easily adjusted from the magnet. Also heat impacts on the band remain minor. In another embodiment of the invention the drags are preserved but the forces directed on them are substantially reduced in preserving the magnetic forces by means of the mechanical dragging forces to quite small, at least under 50% of the total sidewise motion force.

The position of a band saw blade-knife adjusted with magnets can in different stress situations be kept in place in spite of different circumstances tending to change the straining pollution that for different reasons is directed on the blade.

In order to prevent the tendency of the circular saw into wave form one can with the dependency of the adjustments of the magnetic devices to on each other better prevent the tendency of the knife-band into said wave-form appearing by rotation.

In the following the invention is disclosed with reference to the enclosed drawing, where
Figure 1 shows a band saw from the side,
Figure 2 shows the blade-knife of a blade saw as a part cut,
Figure 3 shows a circular saw,
Figure 4 shows an element,
Figure 5 shows the blade of a circular saw from one end.

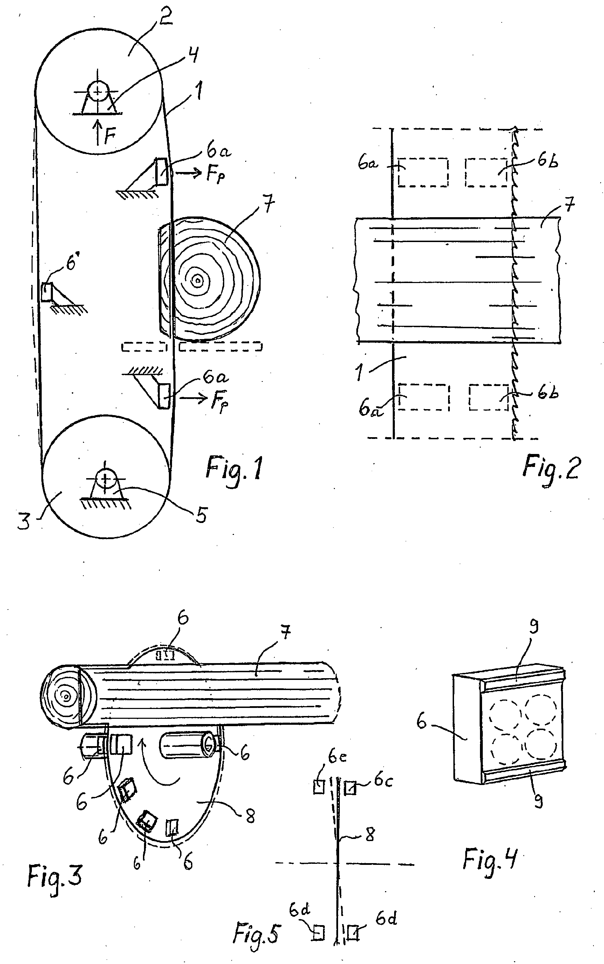

Figure 1 shows a conventional band saw, which has a band-knife 1 circulation arrangement around two wheels 2 an d 3. Bearing spot 4 of wheel 2 can be moved and to it a force F is directed by use in order to get the pre-tightness just right. The bearing spot 5 of wheel 3 can be fixed. In the sawing spot, on which the tree 7 is placed, the band-knife 1 is pulled out a little from the straight line between the peripheries of wheels 2 and 3. With this pull out a sawing line is formed, which is meant to be retained all the time during sawing. In the methods according to this invention this line is formed by means of elements 6 (in figures 3 and 4), thanks to push forces Fp of which the band-knife 1 is deviated a little outward on the area between elements 6. In known solutions there are drags or rolls. The elements are magnets, due to which the band-knife 1, magnetized to same polarity, tends to get loose from elements 6 The final stretching force is thus formed of the force generated by the sidewise motion of band-knife 1 on band-knife by means of magnets 6a, 6b. In each element 6 there is also a distance detector to observe the position band-knife 1.

In another embodiment, elements 6 are placed in regard to the solution of figure 5 on the other side of band-knife 1 and with their pulling force the band-knife 1 is moved sidewise accordingly to the sawing line. In one embodiment, the band-knife 1 is moved sidewise into the device either by means of pulling or pushing magnets.

The repulsion force or pulling force is chosen such that the band saw stays apart from element 6. Elements 6 are, as to their force, most suitably electronically controlled electric magnets. In connection with the element, it is easy to join a distance detector either mechanic or electronic, whereby the repulsion force or pulling force of the magnet is quickly adjustable when the distance of the of the band-knife from the element is changing. The distance may change a little, if, for instance the quality of the tree 7 to be sawn becomes knotty, which increases the need of pushing/ pulling force.

The necessary pulling or pushing force Fp of elements 6 is quite small compared with the straining force forming in the blade. For instance, it can be the 50^{th} - 200^{th} part of the straining force.

It is possible to have either a mechanical drag 9 or a roll in connection with magnetic elements 6, as shown in figure 4, so that by means of magnetic forces the blade is adjusted to stay away from them, or an untouchable blade control is arranged, or so that the drags or rolls are in contact with the blade, but their contact force is substantially relieved by means of the magnets. The substantial relief is for instance over 50%. Then the sawing is not totally stopped, even if the magnetic control would for some reasons get loose. The drags or rolls are either in connection with the elements or they are separately beside the elements, whereby they can be moved, for instance regardless of wearing.

Figure 2 shows a knife-band according to figure 1 seen from the side. The width of the a knife-band is for instance 60 - 200 mm. The broad blade allows many elements 6 side by side. Then a possible turn of the blade direction is easily corrected. When there are separate adjustments for the side by side elements 6a and 6b. The blade can also be turned, turning it with the different mutual adjustment of these elements. There can be elements either those merely rejecting the blade-knife or merely pulling the blade-knife. Naturally, in both cases installation is made on both sides of the appropriate knife-band. Both element types can also be in use at the same time on different sides of the band-knife.

Besides the band-knife 1, there is in figure 1 an additional straining magnet 6', which is placed between wheels 2 and 3 on the return side of knife-band 1. When due to the tree a divergent load gets in the blade (especially a sudden one) or the blade gets longer because of warming or of use, the degree of straining of blade 1, whereby the distance in regard to straining magnets 6a and 6b also changes. This change moves the sawing line of the blade 1 and this cannot be allowed. In order to prevent this and quickly react to it, the adjustment of additional magnets 6' has been made dependent on the adjustment of magnets 6a and 6b, and especially the indication of distance from magnets 6a, 6b so that when the strain of the blade 1 decreases, the distance is not preserved in spite of the adjustment of magnets 6a,6b, and magnet 6' stretches the band 1 to its original tightness so that the distance of blade 1 from stretching magnets 6a and 6b remains original. When the tightness of blade 1 increases, magnet 6'reduces its tightness accordingly. Thus the adjusting devices of magnets 6a ,6b and 6' work as independent pairs of each other. In this way possible contact of the blade 1 with elements 6, and harmful loosening of the blade are avoided, and it is possible especially to maintain the distance of the blade 1 from the straining magnets just right.

Instead of additional magnet 6', by adjustment of the blade 1 tightness, as pair of magnets 6a, 6b can also in an embodiment the mechanical shifting apparatus of bearing housing 4 of wheel 2 work including its whereby said adjusting arrangements are connected dependent on each other.

In an embodiment the adjustment of the blade 1 tightness by means of additional magnet 6' or bearing housing 4 is made independently based on a sensor that measures the blade tightness.

Figure 3 shows a conventional circular saw 8, on the periphery of which elements 6 according to the invention are installed to prevent transitions from the calculated line appearing in the blade.

In this case, however, the sawing line itself is not formed by means of the elements, but it is yet kept up. The sawing line is formed by the flatness of the circular saw. The flatness is maintained, for instance, by continuous control of elements 6.

Figure 5 shows the circular saw blade 8 from the end. Due to the features of the circular saw 8, the motion of the blade sidewise, for instance in the upper edge, causes blade motion in opposite direction in the lower edge (figure 5). This takes place when the circular blade tends to get into a wave form due to warming up, and also if the special quality of the tree leads the blade to the side ion the sawing spot. Therefore, the stability of the blade 8 can be especially improved according to the invention, when there are elements at least all together in four spots, for instance in the lower and upper edge and horizontally in the front and in the trail edge in regard to the distance of the edge. Especially in the case of a circular saw, it is possible by means of the magnetic forces of the magnetic elements 6 to keep the circular blade 8 centerred all the time. Drags 9 and rolls can also in the case of a circular saw be accordingly in contact with blade 8 all the time but relieved by means of the magnets as described above in the case of a band saw.

According to figure 5 of the element pairs 6c and 6d, one is in the upper edge and the other one in the lower edge. The control of these ones is made dependent of each other so that when the distance sensor of the member of the other pair, for instance of 6c, observes the motion of blade 1, immediately the control of magnetic force of this is given both to element 6c in question and also to element 6d of the opposite side. Thanks to the electronic apparatus the control is so fast that on the opposite side the next motion can be anticipated and it can, with magnetic counter force be at least partly be compensated away to the other side. It is advantageous in connection with a bade 8 of a circular saw that there is at least two pairs of elements adjusted in this way, which most suitably work crosswise on the diameter lines in regard to each other. There is in connection with band saw blade 1 at least one pair, the other magnetic member 6' of which or the shifting arrangement of bearing housing 4 is on the portion that runs in other direction than the one where the sawing takes place.

Figure 4 shows an element 6, on the edges of which there are little frictional elevations 9 against which blade-knife 1 is gliding, if it for some reasons gets too close to the element. The elevations are for instance 0,5 mm high from the element surface. As described above the drags can be arranged to work relieved even in continuos connection with the blade.

## Claims

1. A method to strain a sawing device blade (1) made of magnetic material to a chosen sawing line and to steer it to stay on said line, **characterized in that** by means of first elements (6), which generate magnetic force to the blade (1) and are placed in regard to the blade (1) before and after the object (7) to be sawn, a sawing tightness is strained to the blade (1) by moving said blade sidewise to the sawing line, said sawing line is formed in a sawing portion between said first elements (6), and by means of said first elements (6), the blade (1) is continuously affected without contact during sawing in order to adjust the blade (1) portion locating between said first elements (6) to stay on sawing line.

2. A method according to claim 1, **characterized in that** the blade (1) is strained with second magnetic element (6') placed outside the sawing line or with motion of moveable element (4), by means of which the blade (1) is deviated sidewise, and the magnetic force or force produced by moveable element (4) is controlled dependent on the observed position of the blade (1) in regard to the chosen sawing line.

3. A method according to claim 2, **characterized in that** the magnetic force of the second element (6') that tightens the blade (1) and is placed outside the sawing line and the position of the moveable element (4) are controlled dependent on the degree of the tightness observed in the blade (1).

4. A method according to claim 1, **characterized in that** by means of the first elements (6) a force pushing the blade (1) away from or a force pulling it against the first elements (6) is caused.

5. A method according to claim 1, **characterized in that** there are elements (6a, 6b) at least two side by side in the blade (1) direction and they are separately adjusted, when the blade (1) direction is changed into the wanted one.

6. Control and straining device for straining a blade (1) made of magnetising material, to a sawing line and to steer it to stay on said line, **characterized in that** the device includes first elements (6) generating magnetic force, by means of which the blade (1) can be strained without contact to the sawing line by sidewise motion, said sawing line formed between said first elements (6), said first elements (6) being placed in regard to the blade (1) before and after the object (7) to be sawn, the control devices for continuous adjusting of the magnetic forces of said first elements (6) during sawing, with the intention to adjust the portion meant for the sawing line of the blade (1) to stay on the sawing line.

7. Device according to claim 6, **characterized by** several first elements (6) placed side by side in the lateral direction of the blade (1) are mounted.

8. A method to steer a blade (1),(8) of a sawing device, the blade made of magnetizing material, to stay on a chosen sawing line by means of first element (6) and moveable element (4) said elements generating magnetic force or sidewise motion, **characterized in that** several element pairs are used (6a, b); (6b'); (6a, b), (4) or (6c), (6d), which pairs are placed close to the blade (1),(8) in regard of the object (7) to be sawn, on its different sides or on portions opposing the blade (1),(8) directions, at an angle of 180° with a circular saw and on portions of the blade (1) in different directions with a band saw, wherein magnetic forces or sidewise motions generated by means of said elements are adjusted dependent on each other so that the adjusting process carried out by the other member of the pair is facilitated by means of simultaneous or substantially simultaneous adjustment.

9. A method according to claim 8, **characterized in that** at least the magnetic elements (6) steer to continuous impact on the blade (1),(8) by means of the magnetic force.

## Patentansprüche

1. Ein Verfahren, um ein Sägevorrichtungsblatt (1) aus einem magnetischen Material auf eine ausgewählte Sägelinie zu spannen und es zu führen, um auf der besagten Linie zu bleiben, **dadurch gekennzeichnet, dass** mittels erster Elemente (6), die eine magnetische Kraft auf das Blatt (1) erzeugen und in Bezug auf das Blatt (1) vor und nach einem zu sägenden Objekt (7) angeordnet sind, eine Sägestraffheit auf das Blatt (1) gespannt wird durch Bewegen des besagten Blattes seitwärts zu der Sägelinie, wobei die besagte Sägelinie in einem Sägebereich zwischen den besagten ersten Elementen (6) gebildet wird, und mittels der besagten ersten Elemente (6) das Blatt (1) kontinuierlich ohne Kontakt während des Sägens beeinflusst wird, um den Bereich des Blattes (1), der zwischen den besagten ersten Elementen (6) angeordnet ist, einzustellen, um auf der Sägelinie zu bleiben.

2. Ein Verfahren gemäß Anspruch 1, **dadurch gekennzeichnet, dass** das Blatt (1) mit einem zweiten, außerhalb der Sägelinie angeordneten magnetischen Element (6') oder mit einer Bewegung eines beweglichen Elementes (4) gespannt wird, mittels dessen oder deren das Blatt (1) seitwärts abgelenkt wird, und die magnetische Kraft oder eine durch das bewegliche Element (4) erzeugte Kraft abhängig von der festgestellten Position des Blattes (1) in Bezug auf die ausgewählte Sägelinie gesteuert wird.

3. Ein Verfahren gemäß Anspruch 2, **dadurch gekennzeichnet, dass** die magnetische Kraft des zweiten Elementes (6'), die das Blatt (1) strafft und außerhalb der Sägelinie angeordnet ist, und die Position des beweglichen Elementes (4) abhängig von dem Grad der in dem Blatt (1) festgestellten Straffheit gesteuert werden.

4. Ein Verfahren gemäß Anspruch 1, **dadurch gekennzeichnet, dass** mittels der ersten Elemente (6) eine Kraft, die das Blatt (1) von den ersten Elementen wegdrückt oder eine Kraft, die es gegen die ersten Elemente (6) zieht, erzeugt wird.

5. Ein Verfahren gemäß Anspruch 1, **dadurch gekennzeichnet, dass** es zumindest zwei Elemente (6a, 6b) nebeneinander in der Richtung des Blattes (1) gibt und sie separat eingestellt werden, wenn die Richtung des Blattes (1) in die gewollte Richtung geändert wird.

6. Steuer- und Spannungsvorrichtung zum Spannen eines Blattes (1) aus einem magnetisierenden Material auf eine Sägelinie und um es zu führen, um auf der besagten Linie zu bleiben, **dadurch gekennzeichnet, dass** die Vorrichtung erste Elemente (6) einschließt, die eine magnetische Kraft erzeugen, mittels derer das Blatt (1) ohne Kontakt auf die Sägelinie durch seitwärtige Bewegung gespannt werden kann, wobei die besagte Sägelinie zwischen den besagten ersten Elementen (6) gebildet ist, wobei die besagten ersten Elemente (6) in Bezug auf das Blatt (1) vor und nach einem zu sägenden Objekt (7) angeordnet sind, wobei die Steuervorrichtung einem kontinuierlichen Einstellen der magnetischen Kräfte der besagten ersten Elemente (6) während des Sägens dienen mit der Absicht, den für die Sägelinie des Blattes (1) bestimmten Bereich einzustellen, um auf der Sägelinie zu bleiben.

7. Vorrichtung gemäß Anspruch 6, **gekennzeichnet durch** mehrere erste Elemente (6), die nebeneinander in lateraler Richtung des Blattes (1) angeordnet angebracht werden.

8. Ein Verfahren, um ein Blatt (1), (8) einer Sägevorrichtung zu führen, wobei das Blatt aus einem magnetisierenden Material hergestellt ist, um auf einer ausgewählten Sägelinie mittels eines ersten Elementes (6) und eines beweglichen Elementes (4) zu bleiben, wobei die besagten Elemente eine magnetische Kraft oder seitwärtige Bewegung erzeugen, **dadurch gekennzeichnet, dass** mehrere Elementpaare verwendet werden (6a, b); (6b'); (6a, b), (4) oder (6c), (6d), wobei die Paare nahe des Blattes (1), (8) in Bezug auf ein zu sägendes Objekt (7) angeordnet werden auf dessen unterschiedlichen Seiten oder auf Bereichen, die den Richtungen des Blattes (1), (8) gegenüberliegen, mit einer Bandsäge in einem Winkel von 180° und mit einer Kreissäge auf Bereichen des Blattes (1) in unterschiedlichen Richtungen, wobei mittels der besagten Elemente erzeugte magnetische Kräfte oder Seitwärtsbewegungen abhängig voneinander eingestellt werden, so dass der Einstellungsprozess, der von dem anderen Teil des Paares ausgeführt wird, mittels einer simultanen oder im Wesentlichen simultanen Einstellung erleichtert wird.

9. Ein Verfahren gemäß Anspruch 8, **dadurch gekennzeichnet, dass** zumindest die magnetischen Elemente (6) führen, um kontinuierlich auf das Blatt (1), (8) mittels der magnetischen Kraft einzuwirken.

## Revendications

1. Procédé pour forcer une lame de dispositif de sciage (1) constituée de matériau magnétique à suivre une ligne de sciage choisie et pour la diriger de manière qu'elle reste sur ladite ligne, **caractérisé en ce qu'**à l'aide de premiers éléments (6) qui génèrent une force magnétique sur la lame (1) et sont placés en regard de la lame (1) avant et après l'objet (7) à scier, une raideur de sciage est soumise à la lame (1) en déplaçant ladite lame latéralement à la ligne de sciage, ladite ligne de sciage est formée dans une partie de sciage entre lesdits premiers éléments (6) et à l'aide desdits premiers éléments (6), la lame (1) est atteinte en continu sans contact pendant le sciage afin d'ajuster la partie de la lame (1) positionnée entre lesdits premiers éléments (6) de manière qu'elle reste sur la ligne de sciage.

2. Procédé selon la revendication 1, **caractérisé en ce que** la lame (1) est forcée avec un second élément magnétique (6') placé en dehors de la ligne de sciage ou avec un mouvement d'un élément mobile (4), à l'aide duquel la lame (1) est déviée latéralement et la force magnétique ou la force produite par l'élément mobile (4) est commandée selon la position observée de la lame (1) en regard de la ligne de sciage choisie.

3. Procédé selon la revendication 2, **caractérisé en ce que** la force magnétique du second élément (6') qui tend la lame (1) et est placée en dehors de la ligne de sciage et la position de l'élément mobile (4) sont commandées selon le degré de raideur observée dans la lame (1).

4. Procédé selon la revendication 1, **caractérisé en ce qu'**une force poussant la lame (1) loin ou une force la tirant contre les premiers éléments (6) est provoquée à l'aide de premiers éléments (6).

5. Procédé selon la revendication 1, **caractérisé en ce qu'**il y a au moins deux éléments (6a, 6b) situés côte à côte dans la direction de la lame (1) et qui sont ajustés séparément lorsque la direction de la lame (1) est changée dans la direction souhaitée.

6. Dispositif de commande et de forçage pour forcer une lame (1) réalisée en matériau magnétique, à suivre une ligne de sciage et pour la diriger de manière qu'elle reste sur ladite ligne, **caractérisé en ce que** le dispositif comporte des premiers éléments (6) générant une force magnétique, à l'aide de quoi la lame (1) peut être forcée sans contact à suivre la ligne de sciage par un mouvement latéral, ladite ligne de sciage étant formée entre lesdits premiers éléments (6), lesdits premiers éléments (6) étant placés en regard de la lame (1) avant ou après l'objet (7) à scier, les dispositifs de commande étant destinés à l'ajustement continu des forces magnétiques desdits premiers éléments (6) pendant le sciage avec l'intention d'ajuster la partie destinée à la ligne de sciage de la lame (1) de manière qu'elle reste sur la ligne de sciage.

7. Dispositif selon la revendication 6, **caractérisé en ce que** plusieurs premiers éléments (6) placés côte à côte dans la direction latérale de la lame (1) sont montés.

8. Procédé pour diriger une lame (1), (8) d'un dispositif de sciage, la lame étant réalisée avec un matériau magnétique, de manière qu'elle reste sur une ligne de sciage choisie à l'aide d'un premier élément (6) et d'un élément mobile (4), lesdits éléments générant une force magnétique ou un mouvement latéral, **caractérisé en ce que** plusieurs paires d'éléments sont utilisées (6a, b) ; (6b') ; (6a, b), (4) ou (6c), (6d), lesquelles paires sont placées près de la lame (1), (8) en regard de l'objet (7) à scier, sur ses différents côtés ou sur des parties en regard des directions de la lame (1), (8), avec une scie à ruban à un angle de 180° avec une scie circulaire sur des parties de la lame (1) dans différentes directions, dans lequel des forces magnétiques ou des mouvements latéraux générés à l'aide desdits éléments sont ajustés les uns en fonction des autres de sorte que le processus d'ajustement réalisé par l'autre élément de la paire soit facilité à l'aide d'un ajustement simultané ou sensiblement simultané.

9. Procédé selon la revendication 8, **caractérisé en ce qu'**au moins les éléments magnétiques (6) dirigent pour impacter en continu la lame (1), (8) à l'aide de la force magnétique.
